# EUROPÄISCHE PATENTANMELDUNG

(11) **EP 1 970 334 A2**
(43) Veröffentlichungstag der Anmeldung: **17.09.2008**
(21) Anmeldenummer: 08101859.0
(22) Anmeldetag: 22.02.2008
(51) Int. Cl.: B65H 5/22

(54) **Bogen bearbeitende Maschine mit pneumatischer Transportvorrichtung**

(30) Priorität: 15.03.2007 DE 102007012435
(71) Anmelder: Heidelberger Druckmaschinen Aktiengesellschaft, 69115 Heidelberg (DE)
(72) Erfinder: Holzschneider, Sascha, 41065, Mönchengladbach (DE); Zanders, Guido, 41179, Mönchengladbach (DE)

(57) **Zusammenfassung**

Die Erfindung betrifft eine Bogen bearbeitende Maschine (100) mit mehreren Bearbeitungsstationen (2, 3; 4) und einer Vorrichtung (200, 203) zum Transport der Bogen (6) durch die Maschine (100). Die Transportvorrichtung (200, 203) ist ausschließlich als eine pneumatische Bogenfiihrungs- und Transporteinrichtung (200, 203) ausgebildet, welche eine Vielzahl von parallel zueinander angeordneten, rechtwinklig zur Bogentransportrichtung (F) ausgerichteten und in der Bogentransportebene (T) liegenden Düsenbalken (200) besitzt.

## Beschreibung

Die Erfindung betrifft eine Bogen bearbeitende Maschine mit einer Bogentransportvorrichtung nach dem Oberbegriff von Anspruch 1.

### Stand der Technik

In Bogen bearbeitenden Maschinen, wie z. B. Bogendruckmaschinen, Falzmaschinen oder Bogenstanzmaschinen erfolgt der Bogentransport mittels bewegter Transportmittel, wie z. B. Trommeln, Bänder oder Greiferketten. Zur Unterstützung der Bogenführung und zur Verhinderung der Berührung der Bogen mit Leitflächen sind aus dem Stand der Technik zahlreiche Vorrichtungen zur hydraulischen Bogenführung bekannt, welche Blas- und Saugluft nutzen.

Begrifflich sind Bogentransport und Bogenführung im Sinne der Anmeldung von einander zu unterscheiden: Bogentransport meint die geführte Bewegung eines Bogens, beinhaltet somit die Bogenführung. Umgekehrt beinhaltet Bogenführung nicht den Transport, sondern meint die Ausrichtung des Bogens in seinen Freiheitsgraden während dessen Transport.

Die DE 195 15 846 C2 beschreibt ein Schwebeelement zur Bogenführung in einer Druckmaschine. Das Schwebeelement dient dabei zum Bogenstrecken, Bogenbremsen, Bogenbeschleunigen oder Bogenführen, insbesondere beim Umführen, Abrollen oder Halten.

Die DE 10 2006 017 461 A1 beschreibt ein Verfahren und eine Vorrichtung zum Tragen eines Bedruckstoffbogens auf einem Luftpolster.
Die DE 44 06 848 C2 beschreibt einen Blaskasten zum schwebenden Führen von Bogen oder Bahnen.

Die beiden letztgenannten Erfindungen basieren auf der Nutzung des aerodynamischen Paradoxons. Geführt wird der Bogen dabei auf einem Luftpolster, indem er durch Einsatz verschiedener Düsen gleichzeitig getragen und angesaugt wird. Der Bogen befindet sich so in einem Gleichgewichtszustand. Dieses Prinzip wird auch in der DE 38 41 909 C2 für ein Verfahren und für eine Vorrichtung zum schwebenden Führen von Bogen oder bahnförmigem Material über eine, insbesondere gekrümmte, Förderstrecke genutzt. Wird ein Bogen über Förderstrecken mit konvexer Krümmung und Förderstrecken mit konkaver Krümmung geführt, nimmt der Unterdruck an den Förderstrecken mit konvexer Krümmung mit zunehmender Fördergeschwindigkeit zu und an Förderstrecken mit konkaver Krümmung mit abnehmender Fördergeschwindigkeit ab.

Die DE 20 2005 005 878 U1 beschreibt eine Führungseinrichtung zur schwebenden Führung von Bahn- oder Bogenmaterial. Dabei besitzt eine Platte, welche als Führungsfläche wirkt, eine Vielzahl von Blasluftleitungsabschnitten zum Einblasen von Luft und eine Vielzahl von Saugluftleitungsabschnitten zum Absaugen zumindest eines Teiles der eingeblasenen Luft.

Während derartige hydraulische Bogenführungseinrichtungen nahezu verschleißfrei arbeiten, unterliegen die mechanischen Bauteile von Bogentransportmitteln, wie Trommeln, Bänder und Greiferketten einem hohen Verschleiß. Insbesondere bei Flachbettbogenstanzen, wo Bogen in kurzer Zeit beschleunigt und in den Bearbeitungsstationen abgebremst werden müssen, herrschen hohe Beschleunigungs- und Abbremskräfte.

Der Erfindung liegt die Aufgabe zugrunde, eine Bogen bearbeitenden Maschine mit einem Bogentransportsystem mit hoher Dauerfestigtkeit und geringem Verschleiß insbesondere auch bei hohen Be- und Entschleunigungen zu beschreiben.

Gelöst wird diese Aufgabe durch eine Bogen bearbeitende Maschine gemäß den kennzeichnenden Merkmalen von Anspruch 1.

Die Bogen bearbeitende Maschine besitzt mindestens eine Bearbeitungsstation und eine Vorrichtung zum Transport der Bogen durch die Maschine. Wenn es sich bei der Bogen bearbeitenden Maschine um eine Flachbettbogenstanze handelt, so können die Bearbeitungsstationen, beispielsweise Stanzstationen, Ausbrechstationen und Nutzentrennstationen sein. Die Transportvorrichtung der Bogen bearbeitenden Maschine ist ausschließlich als eine pneumatische Bogenführungs- und -transporteinrichtung ausgebildet. Diese besitzt eine Vielzahl von Düsenbalken. Die Düsenbalken liegen in der Bogentransportebene und sind rechtwinklig zur Bogentransportrichtung und parallel zueinander angeordnet. Die Düsenbalken liegen dabei - in Bogentransportrichtung betrachtet - insbesondere direkt vor und direkt nach Bearbeitungsstationen. In einer vorteilhaften Ausführungsform der Bogen bearbeitenden Maschine besitzen die Düsenbalken jeweils mindestens einen Druckluftanschluss. Die Druckluftanschlüsse sind mit einem Druckluftgerät verbunden. Weiterhin besitzt jeder Düsenbalken einen Bogentransportkanal, welcher in der Bogentransportebene liegt und sich über die Breite des Düsenbalkens erstreckt. Durch die Breite dieses Bogentransportkanals ist die maximale Breite von zu verarbeitenden Bogen gegeben.

In einer besonders vorteilhaften Ausführungsform arbeiten die Düsenbalken nach dem Venturieffekt. Wird der Düsenbalken von Luft durchströmt, verändert sich der im Düsenbalken bzw. in der Luft herrschende Druck gemäß dem Gesetz von Bernoulli. An der engsten Stelle der Kanäle ist der dynamische Druck maximal und der statische Druck minimal. Die Geschwindigkeit der strömenden Luft steigt im Verhältnis der Querschnitte beim Durchströmen der engsten Stelle an. Gleichzeitig sinkt der Druck im - in Bogentransportrichtung betrachtet - hinteren Teil des Bogentransportkanals. Wird nun ein Bogen an diesen Unterdruckbereich herangeführt, so wird der Bogen entlang des Bogentransportkanals in Bogentransportrichtung beschleunigt und damit transportiert.

Um Bogen sicher und definiert zu führen und zu transportieren, ist in einer vorteilhaften Ausführungsform der Abstand zweier Düsenbalken kleiner als eine Bogenlänge. Damit ist gewährleistet, dass ein Bogen von einem Düsenbalken zum anderen sicher übergeben wird. In der Bogentransportebene können sich auch Bogenführungseinrichtungen befinden, welche fest mit der Bogen bearbeitenden Maschine verbunden sind. Bei den Bogenführungseinrichtungen handelt es sich um dem Fachmann bekannte Elemente, wie z. B. Kugeln, Führungsstangen oder Schergitter. Die Bogenführungseinrichtungen dienen dabei dazu, die Bogen mit größerer Sicherheit zu führen, insbesondere dann, wenn der Abstand zwischen je zwei Düsenbalken in etwa gleich oder größer als eine Bogenlänge ist.

In einer besonders vorteilhaften Ausführungsform besitzen die Düsenbalken eine Vielzahl über die Breite eines jeweiligen Düsenbalkens angeordnete Druckluftanschlüsse. Dabei ist jeder einzelne Druckluftanschluss mit einem Druckluftgerät verbunden. Durch die Vielzahl von Druckluftanschlüssen ist sichergestellt, dass die Düsenbalken - über ihre Breite betrachtet - gleichmäßig durchströmt werden und der Unterdruck im Unterdruckbereich des Bogentransportkanals über dessen Breite konstant ist. Damit können Bogen sicher in Bogentransportrichtung bewegt werden, ohne eine Verdrehung durch ungleiche Druckluftverteilung zu erfahren. In einer Fortbildung der Erfindung können die Druckluftanschlüsse der Düsenbalken einzeln über eine Steuereinrichtung angesteuert werden. Dazu befinden sich zwischen den Druckluftanschlüssen und dem Druckluftgerät schnell arbeitende Ventile zur Druckluftregelung. Durch die gezielte Regelung der Druckluftzufuhr über die Breite des Düsenbalkens kann die Verteilung des Unterdrucks über die Breite des Düsebalkens bestimmt und die Bogen dadurch ausgerichtet werden.

Hinsichtlich weiterer vorteilhafter Ausgestaltungen der Erfindung wird auf die Unteransprüche sowie die Beschreibung eines Ausführungsbeispiels unter Bezugnahme auf die beiliegenden Zeichnungen verwiesen.

### Ausführungsbeispiel

Die Erfindung soll an Hand eines Ausführungsbeispiels noch näher erläutert werden. Es zeigen in schematischer Darstellung
- Fig. 1: eine Bogenstanze mit einer pneumatischen Bogenführungs- und Transporteinrichtung
- Fig. 2: eine räumliche Darstellung eines Düsenbalkens
- Fig. 2a: einen Schnitt durch den Düsenbalken von Fig. 2 entlang A-A

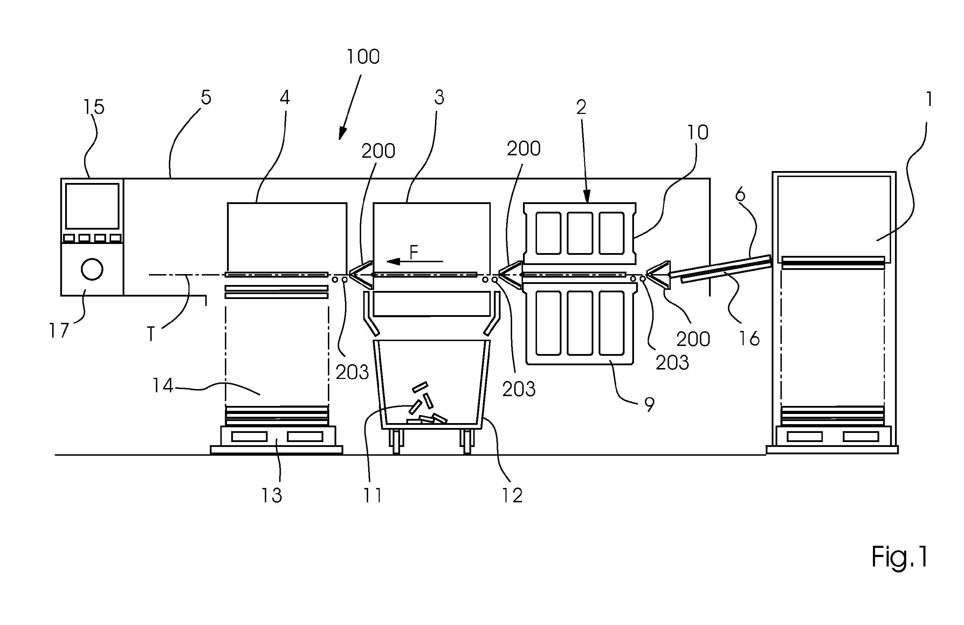

In Figur 1 ist der prinzipielle Aufbau einer Bogenstanz- und -prägemaschine 100 zum Stanzen, Ausbrechen und Ablegen von Bögen aus Papier, Pappe und dergleichen dargestellt. Die Stanz- und Prägemaschine 100 besitzt einen Anleger 1, eine Stanzstation 2, eine Ausbrechstation 3 und einen Ausleger 4, die von einem gemeinsamen Maschinengehäuse 5 getragen und umschlossen werden.

Die Bögen 6 werden durch einen Anleger 1 von einem Stapel vereinzelt und zugeführt und durch eine Transportvorrichtung, die aus Düsenbalken 200 und Bogenführungseinrichtungen besteht, intermittierend durch die verschiedenen Stationen 2, 3 und 4 der Stanz- und Prägemaschine 100 transportiert.

Die Stanzstation 2 besteht aus einem Untertisch 9 und einem Obertisch 10. Der Untertisch 9 ist fest im Maschinengestell gelagert und mit einer Gegenplatte zum Stanzmesser versehen. Der Obertisch 10 ist vertikal hin- und herbewegbar gelagert.

Die Transportvorrichtung transportiert den Bogen 6 von der Stanz- und Prägestation 2 in die nachfolgende Ausbrechstation 3, die mit Ausbrechwerkzeugen ausgestattet ist. In der Ausbrechstation 3 werden mit Hilfe der Ausbrechwerkzeuge die nicht benötigten Abfallstücke aus dem Bogen 6 nach unten herausgestoßen, wodurch die Abfallstücke 11 in einen unter der Station eingeschobenen behälterartigen Wagen 12 fallen.

Von der Ausbrechstation 3 gelangt der Bogen in den Ausleger 4, wo der Bogen entweder nur einfach abgelegt wird, oder aber gleichzeitig eine Trennung der einzelnen Nutzen erfolgt. Der Ausleger 4 kann auch eine Palette 13 enthalten, auf der die einzelnen Bögen in Form eines Stapels 14 aufgestapelt werden, so dass nach Erreichen einer bestimmten Stapelhöhe die Paletten mit den aufgestapelten Bögen 14 aus dem Bereich der Stanz- und Prägemaschine 100 weggefahren werden können.

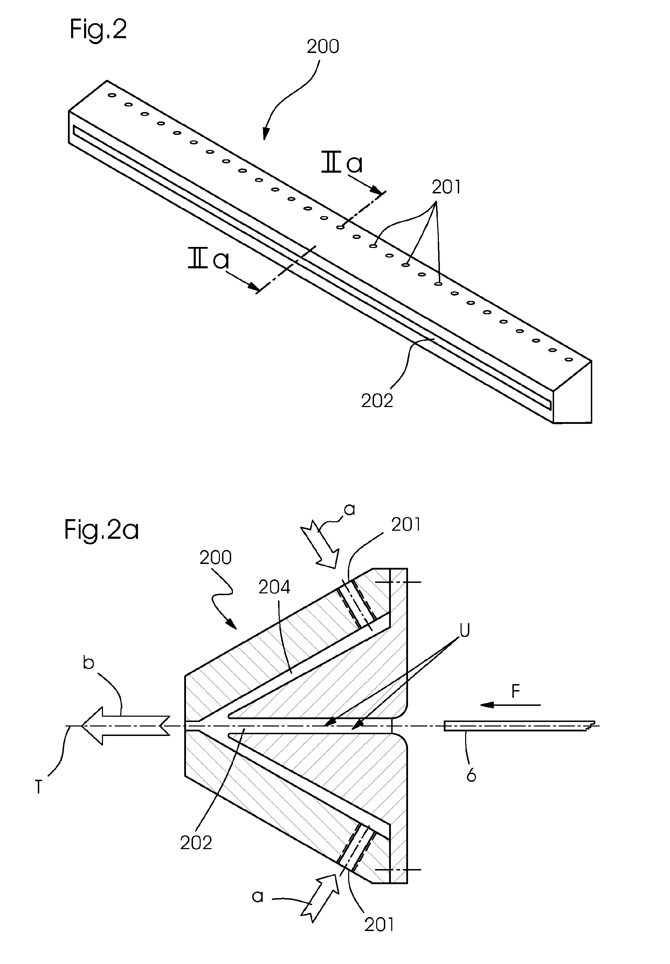

In Fig. 2 ist ein Düsenbalken 200 gezeigt, wie er in der in Fig. 1 dargestellten Bogenstanz-und -prägemaschine 100 Verwendung findet. Der Düsenbalken 200 besitzt über seine Arbeitsbreite verteilte Druckluftanschlüsse 201. In der Mitte des Düsenbalkens 200 mit trapezförmigem Querschnitt befindet sich ein Bogentransportkanal 202. Die Funktionsweise des Düsenbalkens ergibt sich aus der Schnittdarstellung in Fig. 2a. Der Bogentransportkanal 202 des Düsenbalkens 200 liegt in der Bogentransportebene T. Ein Bogen 6 wird durch den im Unterdruckbereich U des Bogentransportkanals 202 herrschenden Unterdruck angesaugt, in den Bogentransportkanal 202 gezogen, beschleunigt und durch die Blasluft b in Bogentransportrichtung F weitertransportiert. Der Unterdruck im Unterdruckbereich U entsteht aufgrund des Venturieffekts. Druckluft a wird den Druckluftanschlüssen 201 des Düsenbalkens 200 zugeführt. Die Druckluft a durchströmt den Strömungskanal 204 und nach dem Gesetz von Bernoulli bildet sich im Unterdruckbereich U ein Unterdruck und die Luft entweicht als Blasluft b. Bei größerer Produktdicke und höherem Gewicht des zu transportierenden Bogens 6 muss auch der nach dem Gesetz von Bernoulli erzeugte Unterdruck erhöht werden. Zusätzlich ist es vorteilhaft, wenn die Höhe des Bogentransportkanals 202 an die Produktdicke des Bogens 6 angepasst werden kann (nicht dargestellt).

### Bezugszeichenliste

- 1: Anleger
- 2: Stanzstation
- 3: Ausbrechstation
- 4: Ausleger
- 5: Maschinengehäuse
- 6: Bogen
- 9: Untertisch
- 10: Obertisch
- 11: Abfallstücke
- 12: Wagen
- 13: Palette
- 14: Auslagestapel
- 15: Steuerung
- 16: Zuführtisch
- 17: Druckluftgerät

- 100: Bogenstanz- und -prägemaschine

- 200: Düsenbalken
- 201: Druckluftanschluss
- 202: Bogentransportkanal
- 203: Bogenführungseinrichtung
- 204: Strömungskanal

- F: Bogentransportrichtung
- T: Bogentransportebene
- U: Unterdruckbereich
- a: Druckluft
- b: Blasluft

## Patentansprüche

1. Flachbettbogenstanze (100) mit mindestens einer Bearbeitungsstation (2, 3; 4) und einer Vorrichtung (200, 203) zum Transport der Bogen (6) durch die Maschine (100),
**dadurch gekennzeichnet,**
**dass** diese Transportvorrichtung (200, 203) ausschließlich als eine pneumatische Bogenführungs- und Transporteinrichtung (200, 203) ausgebildet ist, welche eine Vielzahl von parallel zueinander angeordneten, rechtwinklig zur Bogentransportrichtung (F) ausgerichteten und in der Bogentransportebene (T) liegenden Düsenbalken (200) besitzt, wobei jeder Düsenbalken (200) mindestens einen Druckluftanschluss (201) und einen in Bogentransportebene (T) liegenden Bogentransportkanal (202) besitzt und es sich bei den Düsenbalken (200) um mit dem Venturieffekt arbeitenden Düsenbalken (200) handelt.

2. Bogen bearbeitende Maschine nach Anspruch 1,
**dadurch gekennzeichnet,**
**dass** der Abstand zweier Düsenbalken (200) kleiner ist, als eine Bogenlänge.

3. Bogen bearbeitende Maschine nach einem der Ansprüche 1 bis 2,
**dadurch gekennzeichnet,**
**dass** in der Bogentransportebene (T) befindliche Bogenführungseinrichtungen (203) fest mit der Bogen bearbeitenden Maschinen (100) verbunden sind.

4. Bogen bearbeitende Maschine nach einem der Ansprüche 1 bis 3,
**dadurch gekennzeichnet,**
**dass** die Düsenbalken (200) eine Vielzahl über die Breite eines jeweiligen Düsenbalkens (200) angeordnete Druckluftanschlüsse (201) besitzen.

5. Bogen bearbeitende Maschine nach Anspruch 4,
**dadurch gekennzeichnet,**
**dass** die Druckluftanschlüsse (201) der Düsenbalken (200) einzeln über eine Steuereinrichtung (15) angesteuert werden können.
